# EUROPEAN PATENT APPLICATION

(11) **EP 3 985 580 A1**
(43) Date of publication of application: **20.04.2022**
(21) Application number: 20821742.2
(22) Date of filing: 04.06.2020
(51) Int. Cl.: G06Q 10/04

(54) **INFORMATION PROCESSING DEVICE, INFORMATION PROCESSING METHOD, AND PROGRAM**

(30) Priority: 11.06.2019 JP 2019109117
(71) Applicant: Sony Group Corporation, Tokyo 108-0075 (JP)
(72) Inventor: MIYAHARA, Masanori, Tokyo 108-0075 (JP); TAKAMATSU, Shingo, Tokyo 108-0075 (JP); IIDA, Hiroshi, Tokyo 108-0075 (JP); NAKADA, Kento, Tokyo 108-0075 (JP); HORIGUCHI, Yuji, Tokyo 108-0075 (JP); HIGASHIDE, Motoki, Tokyo 108-0075 (JP)
(74) Representative: MFG Patentanwälte Meyer-Wildhagen Meggle-Freund Gerhard PartG mbB
(86) International application number: PCT/JP2020/022183
(87) International publication number: WO 2020/250810

(57) **Abstract**

An information processing apparatus (100) according to the present disclosure includes: a control unit (130) that acquires a past case including a past prediction target and an analysis data set used for predictive analysis for the prediction target, acquires data to be used for predictive analysis, extracts a prediction target in a case of performing the predictive analysis by using the data based on the data and the past case, and constructs, based on the data, a data set to be used for the predictive analysis for the extracted prediction target.

## Description

### Field

The present disclosure relates to an information processing apparatus, an information processing method, and a program.

### Background

In recent years, various data have been accumulated in business, and the importance of utilizing the accumulated data in business has been recognized for a long time. As a method of utilizing data in business, for example, a method using a predictive analysis technology of predicting a future result from past data using machine learning is known (see, for example, Patent Literature 1).

### Citation List

### Patent Literature

Patent Literature 1: JP 2017-16321 A

### Summary

### Technical Problem

However, in the above-described technology according to the related art, what is predicted is determined in advance. As described above, according to the related art, it is necessary for a user to determine what to predict, and there is room for improvement in that the user more easily analyzes information.

Therefore, the present disclosure proposes an information processing apparatus, an information processing method, and a program that enable a user to more easily analyze information.

### Solution to Problem

An information processing apparatus according to the present disclosure includes: a control unit that acquires a past case including a past prediction target and an analysis data set used for predictive analysis for the prediction target, acquires data to be used for predictive analysis, extracts a prediction target in a case of performing the predictive analysis by using the data based on the data and the past case, and constructs, based on the data, a data set to be used for the predictive analysis for the extracted prediction target.

### Brief Description of Drawings

FIG. 1 is a diagram for describing introduction of predictive analysis into business.
FIG. 2 is a diagram schematically illustrating analysis processing according to an embodiment of the present disclosure.
FIG. 3 is a diagram for describing an example of a past case according to the embodiment of the present disclosure.
FIG. 4 is a diagram illustrating an example of user data according to the embodiment of the present disclosure.
FIG. 5 is a diagram illustrating an example of an image presented to a user.
FIG. 6 is a block diagram illustrating an example of a configuration of an information processing system according to the embodiment of the present disclosure.
FIG. 7 is a diagram illustrating an example of a configuration of an information processing apparatus according to the embodiment of the present disclosure.
FIG. 8 is a diagram illustrating an example of a past case storage unit according to the embodiment of the present disclosure.
FIG. 9 is a diagram illustrating an example of an image for designating an acquisition source of user data.
FIG. 10 is a diagram illustrating an example of an image indicating a situation of calculation of a predicted processing time.
FIG. 11 is a diagram illustrating an example of an image indicating a situation of learning of a prediction model.
FIG. 12 is a diagram illustrating an example of an image indicating completion of analysis processing.
FIG. 13 is a diagram illustrating an example of an image indicating an analysis processing result.
FIG. 14 is a diagram (1) illustrating another example of the image indicating the analysis processing result.
FIG. 15 is a diagram (2) illustrating another example of the image indicating the analysis processing result.
FIG. 16 is a flowchart illustrating a procedure of information processing according to the embodiment of the present disclosure.
FIG. 17 is a hardware configuration diagram illustrating an example of a computer that implements functions of the information processing apparatus or a terminal apparatus.

### Description of Embodiments

Hereinafter, embodiments of the present disclosure will be described in detail with reference to the drawings. Note that, in each of the following embodiments, the same reference signs denote the same portions, and an overlapping description will be omitted.

Further, the present disclosure will be described in the following order.
1. Embodiment
1-1. Background
1-2. Outline of Information Processing According to Embodiment
1-3. Configuration of Information Processing System According to Embodiment
1-4. Configuration of Information Processing Apparatus According to Embodiment
1-5. Procedure of Information Processing According to Embodiment
2. Other Configuration Examples
3. Hardware Configuration

### (1. Embodiment)

### [1-1. Background]

First, before an embodiment of the present disclosure is described in detail, a workflow for utilizing predictive analysis in business will be described as a background of the embodiment of the present disclosure.

When utilizing the predictive analysis in business, a user determines what predictive analysis to perform based on accumulated data. Further, the user evaluates a business effect obtained by introducing the predictive analysis by performing a demonstration experiment of the determined predictive analysis. By performing the demonstration experiment and evaluating the business effect obtained by the predictive analysis as described above, the user can introduce highly effective predictive analysis into business, and the predictive analysis can be utilized in business.

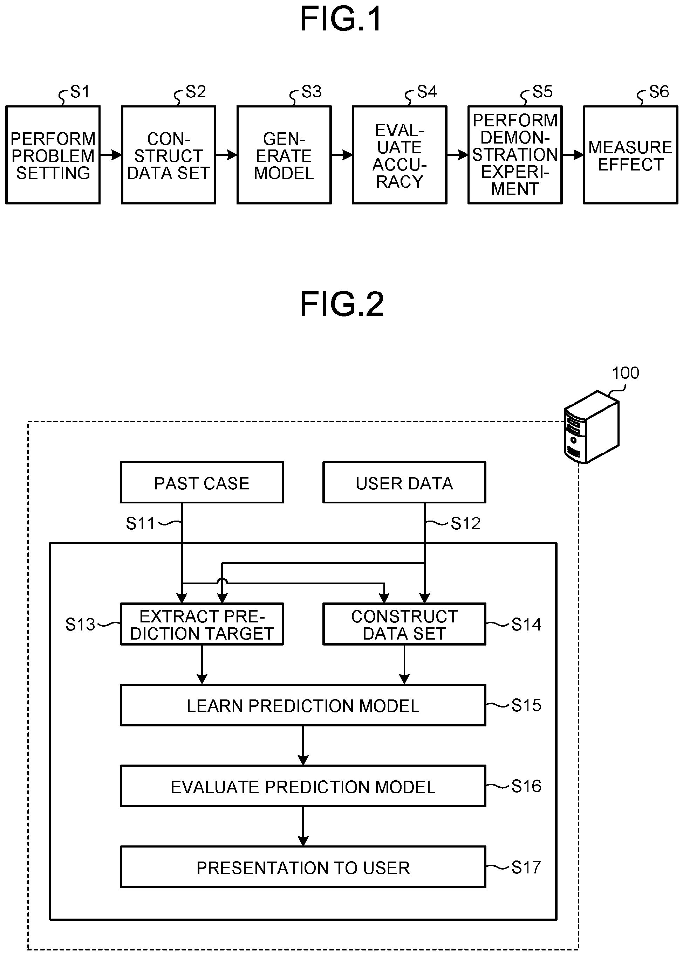

Examples of the workflow for actually utilizing the predictive analysis in business include a flow illustrated in FIG. 1. FIG. 1 is a diagram for describing introduction of the predictive analysis into business.

Specifically, in the example illustrated in FIG. 1, first, the user perform problem setting as to, among the accumulated data, which data is to be used and what is predicted (Step S1). Example of the problem setting include "predicting whether or not a loan loss is to occur by using data such as customer's annual revenue and total asset", "predicting future sales by using data such as past sales and an age range of customers", and the like. As described above, the appropriate problem setting varies depending on the business field and the user. Therefore, the user performs the problem setting based on his/her own knowledge or experience, for example.

Next, the user constructs a data set according to the problem setting from the accumulated data (Step S2). The user constructs the data set by, for example, extracting data to be used for the predictive analysis from the accumulated data or interpreting or structuring the data in accordance with the predictive analysis. The construction of the data set may also require, for example, the knowledge and experience of the user.

Subsequently, the user generates a prediction model based on the problem setting and the data set (Step S3). The prediction model is generated using general machine learning. In this case, the user can generate the prediction model by using, for example, an existing information processing apparatus or the like.

The user evaluates accuracy of the generated prediction model (Step S4). The accuracy of the prediction model is evaluated using a general evaluation index such as an area under the curve (AUC) or accuracy. In this case, the user can evaluate the accuracy of the prediction model by using, for example, an existing information processing apparatus or the like.

Next, the user who has performed the evaluation of the accuracy of the prediction model performs a demonstration experiment using the generated prediction model (Step S5). For example, the user collects data with a limited range such as a limited period or region, and performs predictive analysis on the data by using the generated prediction model. The user introduces the predictive analysis into business on a trial basis. For example, the user purchases products or changes a business partner according to the analysis result.

Subsequently, the user measures an effect of the demonstration experiment (Step S6). The user measures the effect by comparing data before and after the experiment, for example, comparing the sales in a case where the predictive analysis is experimentally introduced with the sales before the introduction. Thereafter, the user introduces the predictive analysis into actual business according to the result of the demonstration experiment and the measured effect.

As described above, in a case where the predictive analysis is introduced into actual business, the user's knowledge and experience are required in problem setting and data set construction, which may become a bottleneck of introduction. In addition, since the demonstration experiment is costly, it is difficult to proceed to the demonstration experiment unless it is confirmed that a certain level of effect can be obtained by the introduction of the predictive analysis into business. As described above, the hurdle also tends to be high in proceeding to the demonstration experiment.

### [1-2. Outline of Information Processing According to Embodiment]

The present disclosure focuses on such a point, and according to the present disclosure, an information processing apparatus performs predictive analysis including extraction of a problem setting and construction of a data set. An outline of analysis processing performed by the information processing apparatus will be described below with reference to FIGS. 2 to 4.

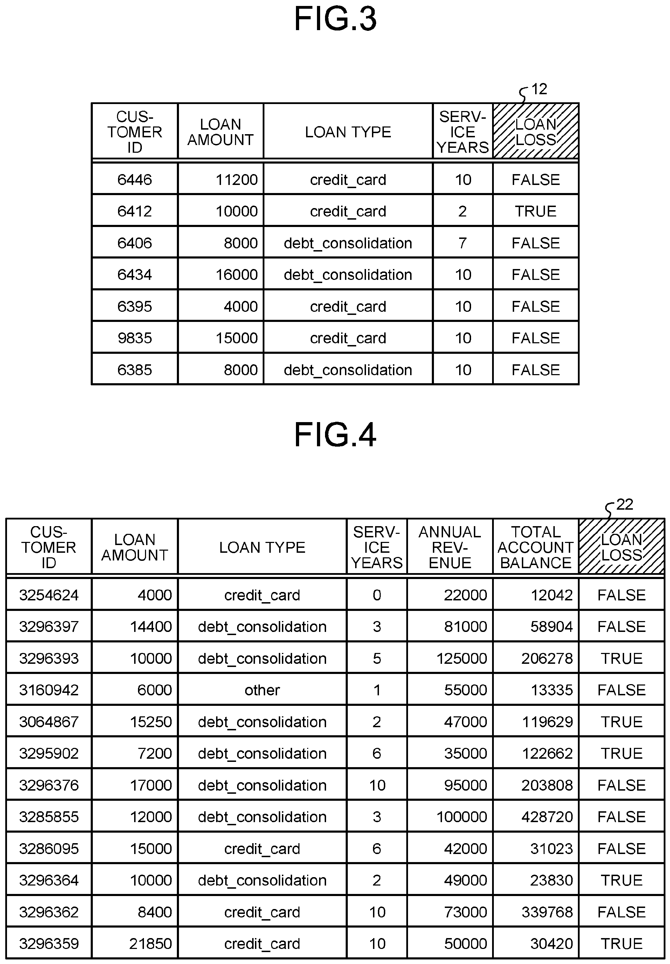

FIG. 2 is a diagram schematically illustrating analysis processing according to an embodiment of the present disclosure. FIG. 3 is a diagram for describing an example of a past case according to the embodiment of the present disclosure. FIG. 4 is a diagram illustrating an example of user data according to the embodiment of the present disclosure.

The analysis processing according to the present disclosure is performed by an information processing apparatus 100 illustrated in FIG. 2. The information processing apparatus 100 is an apparatus that performs information processing according to the present disclosure, and is, for example, a server apparatus, a personal computer (PC), or the like.

In the example of FIG. 2, a case where predictive analysis using user data is performed with reference to a past case will be described. Here, the user data is, for example, data collected by the user. The user data includes, for example, various data such as customer information and product information. The user performs the predictive analysis for sales of the next month, for example, using the user data.

In general, in a case where the predictive analysis is performed using the user data, it is necessary for the user himself/herself to perform problem setting as to "which data is to be used and what is predicted". The user's knowledge and experience may be required to perform the problem setting of the predictive analysis, and thus there is a possibility that the user is burdened. Therefore, in the analysis processing according to the embodiment, the problem setting of the predictive analysis is automatically performed with reference to the past case to reduce the burden on the user.

First, the information processing apparatus 100 acquires a past case (Step S11). Here, the past case includes problem setting of predictive analysis performed in the past. Specifically, the past case includes a prediction target that has been predicted in the past (hereinafter, also referred to as past target) and an analysis data set used for the predictive analysis for the past target (hereinafter, also referred to as a past data set), that is, data that have been used for the past prediction.

Here, an example of the past case will be described with reference to FIG. 3. As illustrated in FIG. 3, the past case includes, for example, a past data set 12. The past data set 12 includes, for example, "customer ID", "loan amount", "loan type", "service years", and "loan loss". In addition, in FIG. 3, it is indicated by hatching that "loan loss" is the past target. As described above, the past case includes the past data set 12 and the past target (here, "loan loss").

Returning to FIG. 2, the information processing apparatus 100 acquires user data (Step S12). Here, an example of the user data will be described with reference to FIG. 4. The user data is data generated and collected by the user, and is data used for generation of a model for the predictive analysis and the like. User data 22 illustrated in FIG. 4 includes, for example, "customer ID", "loan amount", "loan type", "service years", "annual revenue", "total account balance", and "loan loss".

Returning to FIG. 2, the information processing apparatus 100 extracts a prediction target based on the acquired past case and the user data 22 (Step S13). For example, the information processing apparatus 100 selects a past target related to the user from past cases. The information processing apparatus 100 selects the past target by using a recommendation system based on information regarding the user, such as a department to which the user belongs and predictive analysis performed by the user in the past. Here, it is assumed that the information processing apparatus 100 selects, as the past target, "loan loss" of the past data set 12 illustrated in FIG. 3 from past cases.

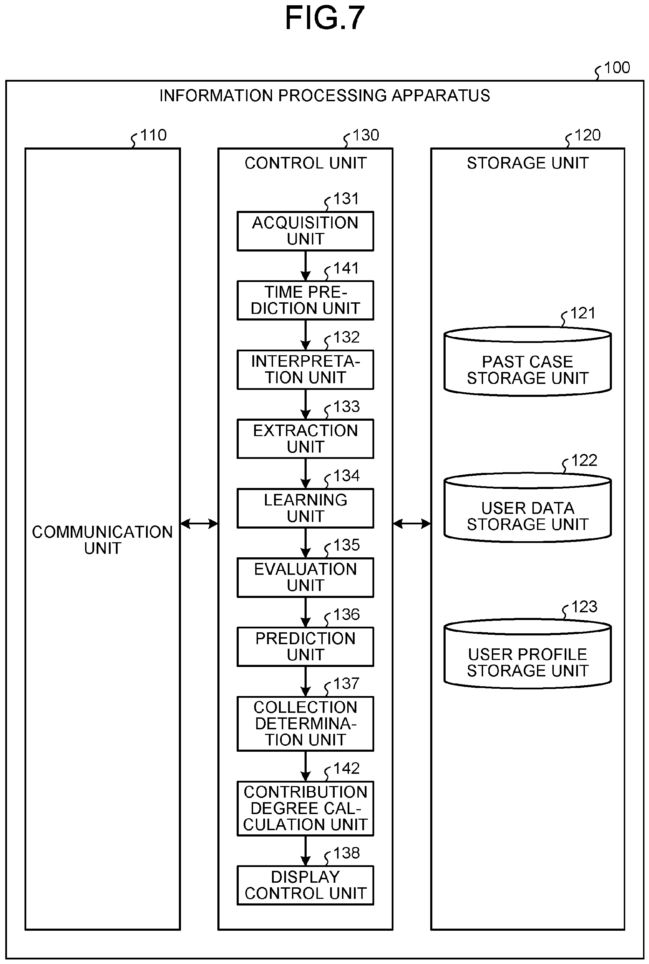

The information processing apparatus 100 extracts the same item as the selected past target from the user data 22 as a prediction target (hereinafter, also referred to as an extraction target) for which the predictive analysis is to be performed this time. In the example of FIG. 3, the past target selected by the information processing apparatus 100 is "loan loss". Therefore, the information processing apparatus 100 extracts "loan loss" as the prediction target from the user data 22 illustrated in FIG. 4. In FIG. 4, "loan loss", which is the extraction target, is indicated by hatching. Note that details of a method of extracting the extraction target will be described later with reference to FIG. 7.

Returning to FIG. 2, the information processing apparatus 100 constructs a data set (hereinafter, also referred to as a constructed data set) used for the predictive analysis for the extraction target based on the user data 22 (Step S14). For example, the information processing apparatus 100 extracts, as the constructed data set, an item related to the extraction target. For example, the information processing apparatus 100 extracts "customer ID", "loan amount", "loan type", "service years", and "loan loss" from the user data 22 illustrated in FIG. 4 to generate the constructed data set.

Note that, here, the information processing apparatus 100 constructs the data set including a part of the user data 22 illustrated in FIG. 4, but the present disclosure is not limited thereto. It is also possible to construct a data set including all of the user data 22. Note that details of a method of constructing a data set will be described later with reference to FIG. 7.

Returning to FIG. 2, the information processing apparatus 100 learns the prediction model based on the extraction target and the constructed data set (Step S15). The information processing apparatus 100 converts data of the constructed data set into a feature vector. The information processing apparatus 100 generates the prediction model by solving a classification or regression problem by machine learning based on the feature vector and the extraction target.

Next, the information processing apparatus 100 evaluates the accuracy of the predictive analysis by evaluating the generated prediction model (Step S16). The information processing apparatus 100 evaluates the prediction model by using the prediction model and the constructed data set. Note that the evaluation index is selected according to an analysis method such as AUC or accuracy in a case of classification analysis, or mean absolute error (MAE) in a case of regression analysis.

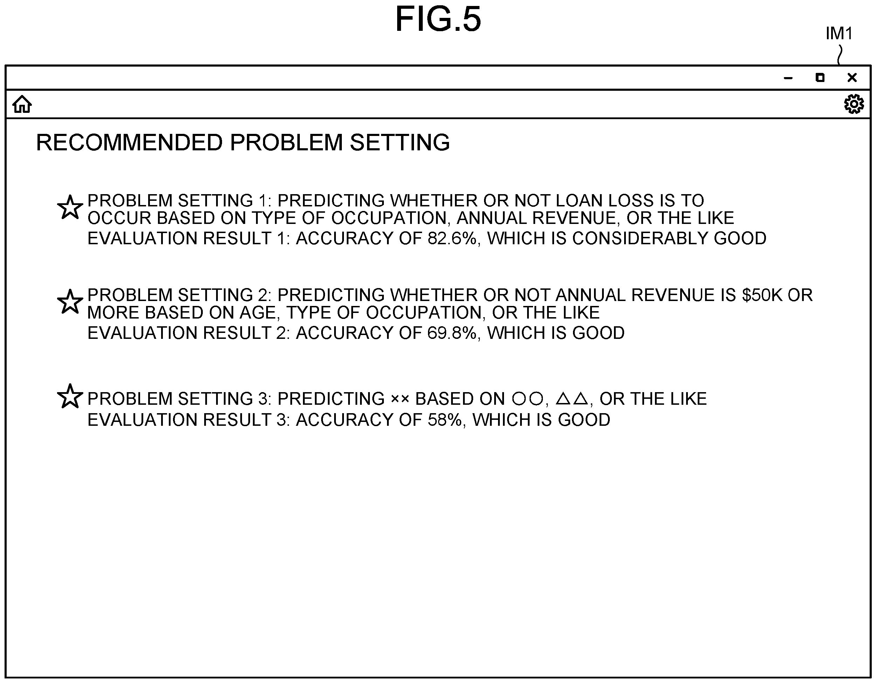

The information processing apparatus 100 presents extraction information including the extraction target and the evaluation result to the user (Step S17). Here, an example of the presentation of the extraction information to the user will be described with reference to FIG. 5. FIG. 5 is a diagram illustrating an example of an image presented to a user.

As illustrated in FIG. 5, the information processing apparatus 100 presents a combination of the problem setting and the evaluation result to the user. In FIG. 5, an extraction result in a case where the information processing apparatus 100 extracts a plurality of problem settings is displayed. In this case, the information processing apparatus 100 displays a list of combinations of the problem settings and evaluation results as in an image IM1.

As a result, the user can determine whether or not to perform the predictive analysis with the problem setting presented by the information processing apparatus 100 with reference to, for example, the evaluation result.

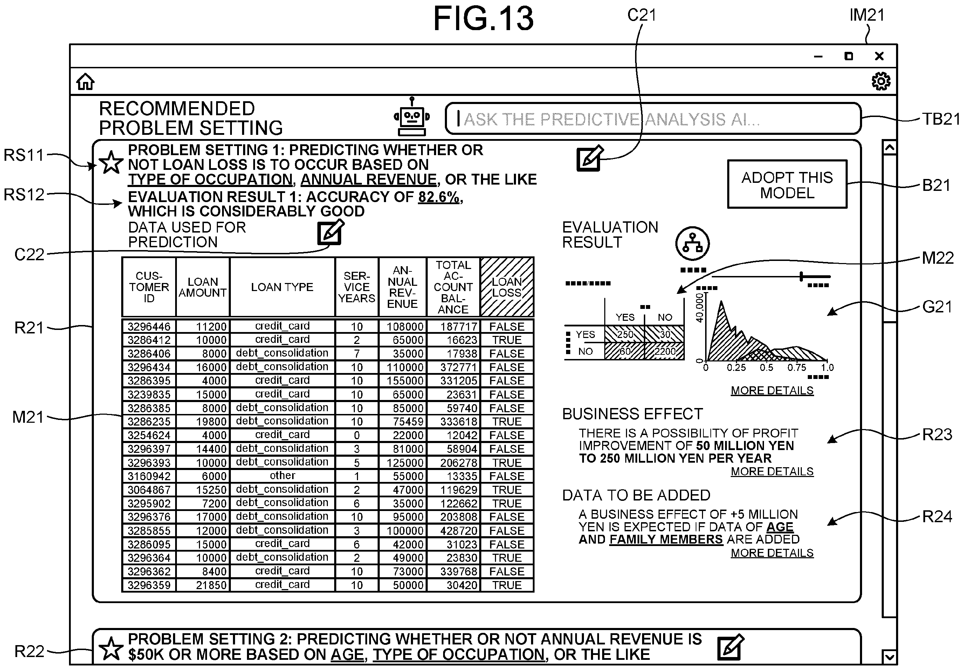

Note that the contents presented to the user by the information processing apparatus 100 are not limited to the problem setting and the evaluation result. The information processing apparatus 100 may present at least one of the constructed data set, the extraction target, or the evaluation result to the user. Alternatively, the information processing apparatus 100 may present reference information in a case where the user selects the problem setting, such as an effect obtained by performing the predictive analysis. Details of a method of displaying the extraction result by the information processing apparatus 100 will be described later with reference to FIG. 13.

As described above, since the information processing apparatus 100 extracts the problem setting, the user need not perform the problem setting, and can more easily perform the predictive analysis. Furthermore, as the information processing apparatus 100 performs the evaluation of the accuracy of the predictive analysis, the user can select predictive analysis to be performed based on the accuracy evaluation, and can more easily perform the predictive analysis with high accuracy.

### [1-3. Configuration of Information Processing System According to Embodiment]

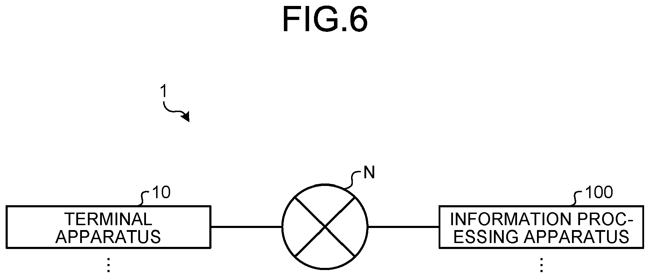

An information processing system 1 illustrated in FIG. 6 will be described. FIG. 6 is a block diagram illustrating an example of a configuration of the information processing system 1 according to the embodiment of the present disclosure. As illustrated in FIG. 6, the information processing system 1 includes a terminal apparatus 10 and the information processing apparatus 100. The terminal apparatus 10 and the information processing apparatus 100 are communicably connected in a wired or wireless manner via a predetermined communication network (network N). Note that the information processing system 1 illustrated in FIG. 6 may include a plurality of terminal apparatuses 10 and a plurality of information processing apparatuses 100.

The terminal apparatus 10 is an information processing apparatus used by a user. The terminal apparatus 10 is used to provide a service related to the predictive analysis. The terminal apparatus 10 may be any apparatus as long as the processing in the embodiment can be implemented. The terminal apparatus 10 may be any apparatus as long as it provides a service related to the predictive analysis to the user and includes a display that displays information. Furthermore, the terminal apparatus 10 may be, for example, an apparatus such as a notebook PC, a desktop PC, a tablet terminal, a smartphone, a mobile phone, or a personal digital assistant (PDA).

The information processing apparatus 100 is used to provide a service related to the predictive analysis to the user. The information processing apparatus 100 is an information processing apparatus that performs a control to display information regarding the problem setting based on the user data and the predictive analysis evaluation result to the user. The information processing apparatus 100 generates an image indicating the information regarding the problem setting and the predictive analysis evaluation result, and provides the image to the terminal apparatus 10.

The information processing apparatus 100 controls displaying performed in the terminal apparatus 10. The information processing apparatus 100 is a server apparatus that provides information to be displayed on the terminal apparatus 10. Note that the information processing apparatus 100 may provide, to the terminal apparatus 10, an application that displays an image or the like to be provided. The information processing apparatus 100 controls the displaying performed in the terminal apparatus 10 by transmitting an image including control information to the terminal apparatus 10. Here, the control information is described with, for example, a script language such as JavaScript (registered trademark), CSS, or the like. Note that the application itself provided from the information processing apparatus 100 to the terminal apparatus 10 may be regarded as the control information.

### [1-4. Configuration of Information Processing Apparatus According to Embodiment]

Next, a configuration of the information processing apparatus 100, which is an example of the information processing apparatus that performs the analysis processing according to the embodiment, will be described. FIG. 7 is a diagram illustrating an example of the configuration of the information processing apparatus 100 according to the embodiment of the present disclosure.

As illustrated in FIG. 7, the information processing apparatus 100 includes a communication unit 110, a storage unit 120, and a control unit 130. Note that the information processing apparatus 100 may include an input unit (for example, a keyboard, a mouse, or the like) that receives various operations from an administrator or the like of the information processing apparatus 100, and a display unit (for example, a liquid crystal display or the like) for displaying various types of information.

### (Communication Unit)

The communication unit 110 is implemented by, for example, a network interface card (NIC) or the like. Then, the communication unit 110 is connected to the network N (see FIG. 6) in a wired or wireless manner, and transmits and receives information to and from another information processing apparatus such as the terminal apparatus 10 or an external server.

### (Storage Unit)

The storage unit 120 is implemented by, for example, a semiconductor memory element such as a random access memory (RAM) or a flash memory, or a storage device such as a hard disk or an optical disk. As illustrated in FIG. 7, the storage unit 120 according to the embodiment includes a past case storage unit 121, a user data storage unit 122, and a user profile storage unit 123. Note that, although not illustrated, the storage unit 120 may store various types of information such as an image serving as a base of an image to be provided to the terminal apparatus 10.

### (Past Case Storage Unit)

The past case storage unit 121 according to the embodiment stores past cases. The past case includes information regarding predictive analysis performed in the past. The past case storage unit 121 stores, for example, a case when the predictive analysis was introduced into business in the past. Note that the past case may be appropriately acquired from an external server or the like without being held by the information processing apparatus 100.

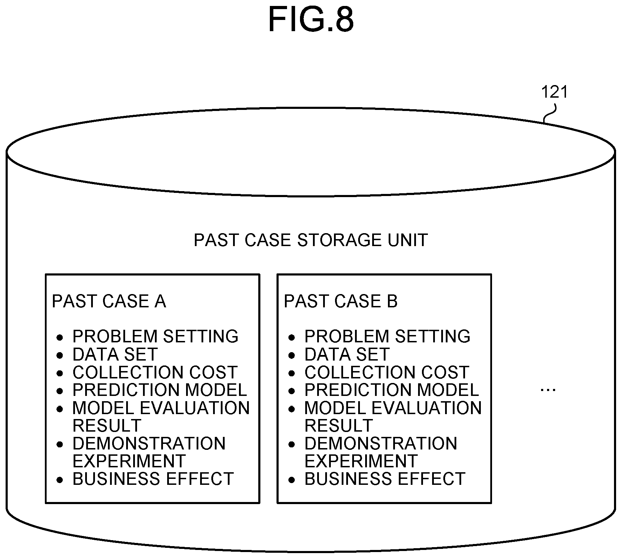

FIG. 8 illustrates an example of the past case storage unit 121 according to the embodiment. FIG. 8 is a diagram illustrating an example of the past case storage unit 121 according to the embodiment of the present disclosure. In the example illustrated in FIG. 8, the past case storage unit 121 stores information regarding "problem setting", "data set", "collection cost", "prediction model", "model evaluation result", "demonstration experiment", "business effect", and the like for each case. The past case storage unit 121 stores a plurality of past cases such as a past case A, a past case B, and the like.

The "problem setting" is information indicating what data is used and what is predicted in the predictive analysis. The "problem setting" includes, for example, a plurality of "used items" (explanatory variables) indicating "what data were used" and one "prediction target" (objective variable) indicating "what was predicted". For example, in the example illustrated in FIG. 3, an item indicated by hatching is the prediction target, and the remaining items are the used items.

The description returns to FIG. 8. The "data set" is a past data set used for learning of the prediction model. For example, the "data set" is a data set including "input data" and "correct data". For example, the past data set 12 illustrated in FIG. 3 corresponds to such a "data set".

The "collection cost" illustrated in FIG. 8 is a cost required for collecting data used in the predictive analysis. The "collection cost" includes, for example, a period and cost required for collecting data for each item.

The "prediction model" is a past prediction model (hereinafter, also referred to as a past model) generated using "problem setting" and "data set" stored. The "prediction model" is a model generated by solving a classification or regression problem by machine learning, for example.

The "model evaluation result" is a result of evaluation of accuracy of the stored "prediction model". The "model evaluation result" includes an evaluation result using an evaluation index such as AUC or accuracy.

The "demonstration experiment" is information regarding the contents and results of the demonstration experiment performed for introducing the predictive analysis into business. The "demonstration experiment" includes, for example, information such as a period and range of the experiment, data used for the experiment, an effect obtained by the experiment, and costs required for the experiment.

The "business effect" is information regarding a business effect obtained after introducing the predictive analytics into business. The "business effect" includes, for example, information such as a profit amount such as an increased sales amount and the amount of reduced cost such as a reduced labor cost.

As described above, in the example illustrated in FIG. 8, the past case storage unit 121 stores, for each of a plurality of past cases, various types of information in a case where the predictive analysis was introduced into business in the past. Note that the above-described past case is an example, and as long as the "problem setting" and the "data set" are stored, the past case storage unit 121 does not have to store some information such as the "collection cost", the "model evaluation result", and the "demonstration experiment", or may store information other than the above-described information.

### (User Data Storage Unit)

Returning to FIG. 7, the user data storage unit 122 will be described. The user data are various data created or collected by the user. As a data format of the user data, for example, various formats are assumed as described below.
- Text - words, sentences, hypertext markup language (HTML), etc.
- Media - RGB image, depth image, vector image, moving image, sound, etc.
- Composite document - office document, PDF, web page, email, etc.
- Sensor data - current location, acceleration, heart rate, etc.
- Application data - start log, file information in process, etc.
- Database - relational database, key value store, etc.

Note that the user data may be appropriately acquired from the terminal apparatus 10, an external server, or the like without being held by the information processing apparatus 100. Furthermore, the user data may be raw data directly acquired from a camera, a sensor, or the like, or may be processed data obtained by performing processing such as feature amount extraction on the raw data. Alternatively, the user data may include metadata that is a recognition result obtained by performing recognition processing on the raw data or the processed data.

### (User Profile Storage Unit)

Next, the user profile storage unit 123 will be described. The user profile storage unit 123 stores profile information regarding the user. The profile information includes, for example, user information and user case information.

The user information is information regarding the user, and includes, for example, a user ID and information regarding a name of a company, a department, an industry, and the like to which the user belongs. The user information may include information related to those the user is interest in or concerns about, such as a search history of a website or a database, a website browsing history, or a keyword included in a mail or an office document.

In addition, the user case information includes information regarding past predictive analysis performed by the user. The user case information includes, for example, information regarding predictive analysis performed by the user in the past, information regarding past cases related to the user, and the like. Note that such predictive analysis may be predictive analysis performed by the user himself/herself, or may be predictive analysis performed by a department or a company to which the user belongs.

### (Control Unit)

The control unit 130 is implemented by, for example, a central processing unit (CPU), a micro processing unit (MPU), or the like executing a program (for example, a program according to the present disclosure) stored in the information processing apparatus 100 with a RAM or the like as a work area. Further, the control unit 130 is a controller and is implemented by, for example, an integrated circuit such as an application specific integrated circuit (ASIC) or a field programmable gate array (FPGA).

As illustrated in FIG. 7, the control unit 130 includes an acquisition unit 131, a time prediction unit 141, an interpretation unit 132, an extraction unit 133, a learning unit 134, an evaluation unit 135, a prediction unit 136, a collection determination unit 137, a contribution degree calculation unit 142, and a display control unit 138, and implements or executes functions and actions of the information processing described below. Note that the internal structure of the control unit 130 is not limited to the configuration illustrated in FIG. 7, and the control unit 130 may have another configuration as long as the information processing as described later is performed. Furthermore, a connection relationship between the respective processing units included in the control unit 130 is not limited to a connection relationship illustrated in FIG. 7, and may be another connection relationship.

### (Acquisition Unit)

The acquisition unit 131 acquires various types of information from the storage unit 120. The acquisition unit 131 acquires a plurality of past cases from the past case storage unit 121. The acquisition unit 131 acquires the user data from the user data storage unit 122. The acquisition unit 131 acquires the profile information from the user profile storage unit 123. The acquisition unit 131 may acquire various types of information from an external server, the terminal apparatus 10, or the like instead of the past case storage unit 121, the user data storage unit 122, and the user profile storage unit 123.

### (Time Prediction Unit)

The time prediction unit 141 predicts a time required for the analysis processing performed by the control unit 130 from the start of the acquisition of data by the acquisition unit 131 to the presentation of the result of processing such as problem setting extraction to the user.

The time prediction unit 141 performs the analysis processing such as problem setting extraction, learning, and evaluation by using user data acquired by the acquisition unit 131 within a predetermined time (for example, 1 second) (hereinafter, also referred to as partial data). The analysis processing is processing performed by each unit of the control unit 130 from the start of the acquisition of data by the acquisition unit 131 to the presentation of the processing result to the user, and details thereof will be described later.

The time prediction unit 141 measures a processing time of the analysis processing performed using the partial data. The time prediction unit 141 predicts a time required for the analysis processing (predicted processing time) based on the measured processing time. Specifically, the time prediction unit 141 calculates a predicted processing time (predicted processing time = (measured processing time) * (user data size/partial data size)).

The analysis processing may take several hours or more, and in some cases, several days depending on the type and size of the user data. Therefore, there is a demand from the user to know the time required for the analysis processing. Therefore, the time prediction unit 141 calculates the predicted processing time by using the partial data. As a result, it is possible to present an estimated time required for the analysis processing to the user. At this time, by limiting the size of the data used to calculate the predicted processing time to a size that can be acquired in, for example, one second, a time required for calculating the predicted processing time can be shortened.

Furthermore, the time prediction unit 141 does not simply calculate the predicted processing time based on the size of the user data, but calculates the predicted processing time by actually performing the analysis processing using the partial data. Although the size of the user data can be easily acquired, the time required for the predictive analysis depends not only on the size of the user data but also on the nature of the data. Therefore, the time prediction unit 141 can calculate the predicted processing time by actually performing the processing, thereby improving the accuracy in predicting the predicted processing time.

Note that, here, the time prediction unit 141 calculates the predicted processing time by using the partial data acquired within the predetermined time, but the present disclosure is not limited thereto. For example, the time prediction unit 141 may calculate the predicted processing time by using partial data having a predetermined size (for example, 100 rows to 2000 rows).

Alternatively, the time prediction unit 141 may predict the predicted processing time by using a learned processing time prediction model prepared in advance. In this case, the time prediction unit 141 extracts information such as the number of items (the number of columns), the deficiency of each item, the data type of each item (character string/numerical value/date, or the like), and the type of machine learning (binary classification/multi-class classification/regression, or the like) from the partial data, for example. The time prediction unit 141 predicts the predicted processing time by the learned processing time prediction model using the extracted information.

Furthermore, the time prediction unit 141 may update the predicted processing time at a predetermined timing such as a timing when a certain period of time elapses or processing of each unit ends. The time prediction unit 141 performs processing that has not yet ended at the predetermined timing by using the partial data. The time prediction unit 141 updates the predicted processing time by calculating the predicted processing time again based on a time taken for the performed processing.

Note that the partial data used to update the predicted processing time may be the same as the partial data used to calculate the predicted processing time before the update, or may be user data acquired again at the time of the current update. For example, in a case where the interpretation unit 132 to be described later performs structuring processing on all the user data, user data having a predetermined size may be acquired from all the user data on which the structuring processing has been performed, and may be used as the partial data.

### (Interpretation Unit)

The interpretation unit 132 analyzes and structures the user data acquired by the acquisition unit 131 from the user data storage unit 122. First, data analysis performed by the interpretation unit 132 will be described.

As described above, the user data has various data formats. The interpretation unit 132 analyzes the user data by using, for example, a recognizer (not illustrated) for each type of data. It is assumed that the recognizer is stored in, for example, the storage unit 120.

Specifically, for example, the interpretation unit 132 performs recognition processing of detecting a face, a character string, a general object, or the like from an image by using an image recognizer on image data included in the user data. For example, in a case where the image data is an image of a receipt indicating purchase of a product, the interpretation unit 132 detects a user ID (terminal ID), a place where image capturing is performed, a time when the image capturing is performed, and the like from data attached to the image. Furthermore, the interpretation unit 132 detects a character string from the image and recognizes a telephone number, a company name, a purchased product, a price of the product, a total amount, a payment method (cash/credit/electronic money/QR code (registered trademark) payment, or the like), and the like. The interpretation unit 132 adds the recognition result as metadata to the user data as raw data.

In addition to the image data, for example, the interpretation unit 132 recognizes a speaker using a voice recognizer from voice data included in the user data, and converts an utterance content into text. Alternatively, the interpretation unit 132 recognizes a movement action (walking, bicycle, train, or the like) of the user for each time from acceleration data. In addition, the interpretation unit 132 corrects the notation variation or adds a similar expression using a synonym dictionary to text data. In this manner, the interpretation unit 132 analyzes the user data for each type of data and adds the metadata.

In the above-described example, a case where the interpretation unit 132 recognizes one data by using one recognizer has been described. However, for example, the interpretation unit 132 may recognize one data by using a plurality of recognizers. For example, in a case of recognizing voice data, the interpretation unit 132 first converts the voice data into text data, and translates the converted text data into multiple languages. Subsequently, the interpretation unit 132 corrects the notation variation in the translated text data or adds a similar expression. As described above, the interpretation unit 132 may recognize the user data by using the recognizers in multiple stages.

Note that the above-described data recognition is an example, and the interpretation unit 132 may recognize the user data based on various known technologies.

Subsequently, the interpretation unit 132 structures the user data based on the analysis result. The interpretation unit 132 structures the metadata added to the user data by using a template. The template is specialized for the predictive analysis, and for example, it is assumed that the storage unit 120 stores a plurality of templates in advance.

Once the user data to which the metadata is added is input, the interpretation unit 132 performs data structuring by applying the data to the most suitable template.

For example, it is assumed that a concept "user" has concepts "age" and "sex", and a concept "product" has a concept "price". It is assumed that the "user" and the "product" have a relationship of "purchase", and the concept "purchase" has a concept "purchase time". For example, by using a template having such a data structure, the interpretation unit 132 structures metadata which is unstructured data.

Moreover, the interpretation unit 132 may newly add metadata. The metadata added here is used when the problem setting is extracted. For example, the interpretation unit 132 may add, as the metadata, a higher category such as "food expenses" or "miscellaneous living expenses" based on "product name" added to the receipt image.

Note that the above-described structuring is an example, and the interpretation unit 132 may structure the user data based on various known technologies. Furthermore, the template or the higher category described above are examples, and the interpretation unit 132 may structure the user data by using various templates, categories, and metadata specialized for the predictive analysis. Furthermore, in a case where the user data stored in the user data storage unit 122 is already structured, the processing performed by the interpretation unit 132 may be omitted.

In this manner, the interpretation unit 132 analyzes and structures the user data, whereby the burden on the user can be reduced.

### (Extraction Unit)

Subsequently, the extraction unit 133 extracts the problem setting in the predictive analysis based on the user data structured by the interpretation unit 132 (hereinafter, also referred to as structured data) and the past case acquired by the acquisition unit 131. The problem setting includes a plurality of "used items" (explanatory variables) indicating "what data items are to be used" and one "prediction target" (objective variable) indicating "what is predicted".

The extraction unit 133 extracts the "prediction target" from the structured data based on the past case. For example, the extraction unit 133 extracts, as the "prediction target", the same item (variable) as the past target included in the past case from the structured data.

At this time, the extraction unit 133 extracts the "prediction target" that is considered to be related to the user or highly interesting to the user, for example, based on the profile information. For example, in a case where the user conducts a business related to product sales, it is considered that prediction of "sales" is highly interesting to the user. Therefore, in this case, the extraction unit 133 extracts "sales" as the prediction target.

Specifically, the extraction unit 133 extracts candidates from the past targets of the past cases by using the recommendation system based on, for example, the profile information. The extraction unit 133 sets, as the "prediction target" of the problem setting, an item also included in the user data from among the extracted candidates. Examples of the recommendation system include ranking learning, content-based filtering, collaborative filtering, or a system in which they are combined.

Note that the extraction unit 133 may extract a plurality of "prediction targets". For example, in a case where a plurality of past targets are extracted in a ranking format as in the ranking learning, the extraction unit 133 extracts a predetermined number of "prediction targets" from the top in ranking. As described above, since the extraction unit 133 extracts a plurality of "prediction targets", the extraction unit 133 can extract a wide range of "prediction targets" related to the user.

The extraction unit 133 extracts a plurality of "used items" for each extracted "prediction target" (extraction target). The extraction unit 133 sets an item (variable) related to the extraction target from the structured data as the "used item" (explanatory variable). The extraction unit 133 may set, as the "use item", an item even a little related to the extraction target. In this case, the information processing apparatus 100 can improve the accuracy of learning in prediction model learning that is processing after the extraction. Alternatively, the extraction unit 133 may set a predetermined number of items as the "used items" in descending order of relevance to the extraction target. In this case, the information processing apparatus 100 can reduce the processing load in the prediction model learning.

The extraction unit 133 constructs the data set based on the extracted "use item" (hereinafter, also referred to as an extracted item). The extraction unit 133 constructs the data set by extracting data corresponding to the extracted item from the structured data. Since the extraction unit 133 constructs the data set in this manner, it is not necessary for the user to construct the data set according to the problem setting, and the burden on the user can be reduced.

As described above, the extraction unit 133 may extract, for example, a plurality of problem settings. In this case, the extraction unit 133 extracts a plurality of combinations of the "prediction target" and a plurality of "use items" corresponding to the "prediction target". In addition, the extraction unit 133 constructs the data set according to the extracted problem setting. Therefore, in a case of extracting a plurality of problem settings, the extraction unit 133 constructs a plurality of data sets corresponding to each problem setting. In this way, as the extraction unit 133 constructs the data set, even in a case where there is a plurality of problem settings, the user need not construct each corresponding data set, and the burden on the user can be reduced.

### (Learning Unit)

The learning unit 134 learns the prediction model based on the problem setting extracted by the extraction unit 133 and the constructed data set. In a case where the extraction unit 133 extracts a plurality of problem settings, the learning unit 134 learns the prediction model corresponding to each of the plurality of problem settings.

The learning unit 134 divides the constructed data set into learning data and test data. The learning unit 134 converts the learning data into a vector. The learning unit 134 generates the prediction model by solving a classification or regression problem by machine learning, for example, based on the feature vector and the prediction target. Note that the machine learning described above is an example, and the learning unit 134 may learn the prediction model based on various known technologies.

Here, the learning unit 134 divides the constructed data set, but this is an example, and for example, the extraction unit 133 may construct each of a learning data set and a test data set.

### (Evaluation Unit)

The evaluation unit 135 evaluates the prediction model generated by the learning unit 134. In a case where the learning unit 134 generates a plurality of prediction models, the evaluation unit 135 evaluates each of the plurality of prediction models.

The evaluation unit 135 evaluates the prediction model by using the evaluation index based on the prediction model and the test data. The evaluation index is, for example, AUC in a case of binary classification, accuracy in a case of multi-class classification, and MAE in a case of regression. Note that the evaluation index described above is an example, and the evaluation unit 135 may evaluate the prediction model based on various known technologies. For example, the user may designate the evaluation index.

### (Prediction Unit)

The prediction unit 136 predicts a business effect when the prediction model is introduced into business. In a case where the learning unit 134 generates a plurality of prediction models, the prediction unit 136 predicts a business effect (hereinafter, also referred to as a prediction effect) when the plurality of prediction models are introduced into business.

The prediction unit 136 selects a past case in which the same item as the extraction target extracted by the extraction unit 133 is the past target from the past case storage unit 121. The prediction unit 136 performs the predictive analysis in which the "business effect" included in the selected past case is a new "prediction target" (hereinafter, also referred to as an effect prediction target).

Specifically, first, the prediction unit 136 sets the "business effect" as the "effect prediction target". Next, the prediction unit 136 sets an item related to the "business effect" in the past case as the "used item". Note that the prediction unit 136 may set the "used item" among items included in both the past case and the structured user data (or the constructed data set), for example.

The prediction unit 136 constructs a data set (hereinafter, also referred to as an effect learning data set) by extracting data corresponding to the "used item" from the past case. The prediction unit 136 generates a prediction model (hereinafter, also referred to as an effect prediction model) by solving, for example, a regression problem by machine learning, based on an effect prediction data set and the "effect prediction target".

Subsequently, the prediction unit 136 extracts data corresponding to the "use item" from the structured user data and constructs a data set (hereinafter, also referred to as the effect prediction data set). The prediction unit 136 predicts a business effect in a case where the prediction model generated by the learning unit 134 is introduced into business based on the effect prediction data set and the generated effect prediction model.

Note that the above-described method is an example, and the prediction unit 136 may predict the business effect based on various known technologies. Furthermore, the construction of the effect prediction data set, the learning of the effect prediction model, and the like performed by the prediction unit 136 may be performed using some functions of the extraction unit 133 and the learning unit 134.

### (Collection Determination Unit)

The collection determination unit 137 determines a data item (hereinafter, also referred to as a suggested item) to be suggested to the user for collection based on the past case and the user data for each extracted problem setting. In a case where there are a plurality of problem settings, the collection determination unit 137 determines the suggested item for each of the plurality of problem settings. Note that the collection determination unit 137 may determine a plurality of suggested items for one problem setting.

The collection determination unit 137 compares the data set of the past case (past data set) with the data set (constructed data set) constructed by the extraction unit 133. The collection determination unit 137 extracts a "used item" (hereinafter, also referred to as "uncollected item") included in the past data set and not included in the constructed data set.

First, the collection determination unit 137 predicts a business effect in a case where the "uncollected item" is not used in the past case. Specifically, the collection determination unit 137 learns the prediction model by using the past data set excluding the "uncollected item" and evaluates the accuracy of the prediction model. The collection determination unit 137 calculates again the business effect with the evaluated prediction accuracy. Note that the learning of the prediction model, the evaluation, and the calculation of the business effect here are similar to the processings performed by the learning unit 134, the evaluation unit 135, and the prediction unit 136, and thus a description thereof is omitted.

Based on the calculated business effect, the collection determination unit 137 determines, as the suggested item, an "uncollected item" that has caused a decrease in effect.

Note that in a case where the collection determination unit 137 extracts a plurality of "uncollected items", the collection determination unit 137 recalculates the business effect for each "uncollected item". Then, the collection determination unit 137 determines, as the suggested item, an "uncollected item" with the largest business effect decrease amount. Alternatively, the collection determination unit 137 may determine, as the suggested items, "uncollected items" with a business effect decrease amount equal to or more than a threshold, or may determine, as the suggested items, a predetermined number of "uncollected items".

Furthermore, in a case where the "collection cost" spent on data collection is included in the past case, the collection determination unit 137 may determine the suggested item based on the business effect calculated again and the collection cost. In this case, the collection determination unit 137 calculates a difference between an introduction effect obtained by subtracting the collection cost from the business effect calculated by the prediction unit 136 with the "uncollected item" and the business effect calculated without the "uncollected item". The collection determination unit 137 determines an "uncollected item" that has showed a large calculated difference the suggested item.

In this way, as the collection determination unit 137 determines the suggested item including the "collection cost" of the data, the information processing apparatus 100 can give priority to an uncollected item for which collection cost is low and data collection is easy, and suggest the uncollected item to the user. Alternatively, the information processing apparatus 100 can suggest, to the user, collection of data of an uncollected item for which collection cost is high and which increases the business effect when being used.

Note that, here, although the collection determination unit 137 performs the learning of the prediction model, the accuracy evaluation, and the calculation of the business effect in a case where the "uncollected item" is not used, the present disclosure is not limited thereto. For example, the learning unit 134, the evaluation unit 135, and the prediction unit 136 may perform the learning of the prediction model, the accuracy evaluation, and the calculation of the business effect, respectively. In this case, the collection determination unit 137 determines the suggested item based on a result from each unit.

Furthermore, here, the collection determination unit 137 determines the suggested item based on the business effect, but the present disclosure is not limited thereto. The collection determination unit 137 may determine the suggested item based on, for example, a prediction model evaluation result. In this case, the collection determination unit 137 evaluates the accuracy of the learned prediction model without using the "uncollected item", and determines, as the suggested item, an "unused item" that has caused a small decrease in the evaluation.

### (Contribution Degree Calculation Unit)

The contribution degree calculation unit 142 calculates the degree of contribution indicating how much and which feature amount contributes to the prediction result among feature amounts of the test data input to the prediction model learned by the learning unit 134. Specifically, the contribution degree calculation unit 142 removes a feature amount that is a contribution degree calculation target from the input of the prediction model, and calculates the degree of contribution based on a change of the prediction result before and after the removal.

Here, the degree of contribution calculated by the contribution degree calculation unit 142 has a positive value and a negative value. The degree of contribution having a positive value means that a set of feature amounts positively contributes to the prediction, that is, increases a prediction probability predicted by the prediction model. Further, the degree of contribution having a negative value means that a set of feature amounts negatively contributes to the prediction, that is, decreases the prediction probability predicted by the prediction model.

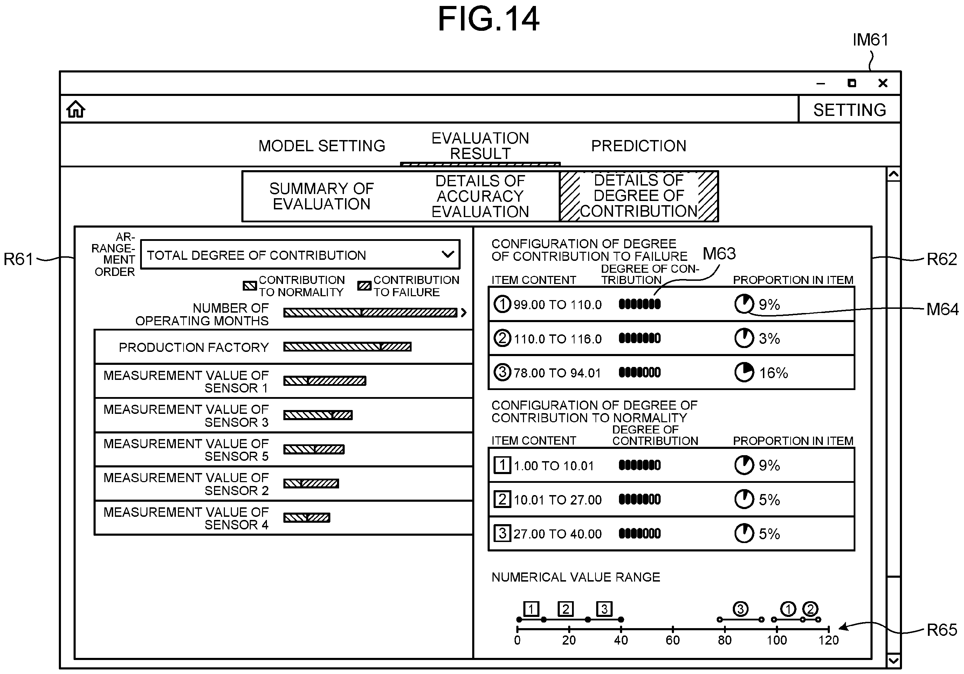

In addition, the contribution degree calculation unit 142 calculates a proportion of a feature amount for which the degree of contribution is calculated in the set (item) of feature amounts. In a case where the calculated proportion is low, even if the degree of contribution is high, a case to which the feature amount contributes rarely occurs. Therefore, a utility value thereof for the user is low. Therefore, in the embodiment of the present disclosure, the contribution degree calculation unit 142 calculates the proportion of the feature amount for which the degree of contribution is calculated, and also presents the proportion to the user as described later with reference to FIG. 14. As a result, the user can check the degree of contribution of the data in consideration of the frequency of occurrence.

Note that, here, the prediction unit 136, the contribution degree calculation unit 142, and the collection determination unit 137 calculate the business effect and the contribution degree, respectively, and determine the suggested item, but it is not necessary to perform all the calculation and the determination. For example, the contribution degree calculation unit 142 may calculate the degree of contribution, and the calculation of the business effect by the prediction unit 136 and the determination of the suggested item by the collection determination unit 137 may be omitted. Alternatively, the calculation of the degree of contribution by the contribution degree calculation unit 142 and the calculation of the business effect by the prediction unit 136 may be performed, and the determination of the suggested item by the collection determination unit 137 may be omitted. In addition, the user may be allowed to select processing for the calculation/determination.

### (Display Control Unit)

The display control unit 138 of FIG. 7 controls display of various types of information. The display control unit 138 controls display of various types of information on the terminal apparatus 10. The display control unit 138 generates an image including control information for controlling a display mode. This control information is described with a script language such as JavaScript (registered trademark), CSS, or the like. The display control unit 138 provides, to the terminal apparatus 10, the image including the control information as described above, thereby causing the terminal apparatus 10 to perform the above-described display processing according to the control information. Note that the display control unit 138 is not limited to the above, and may control the displaying performed in the terminal apparatus 10 by appropriately using various technologies according to the related art.

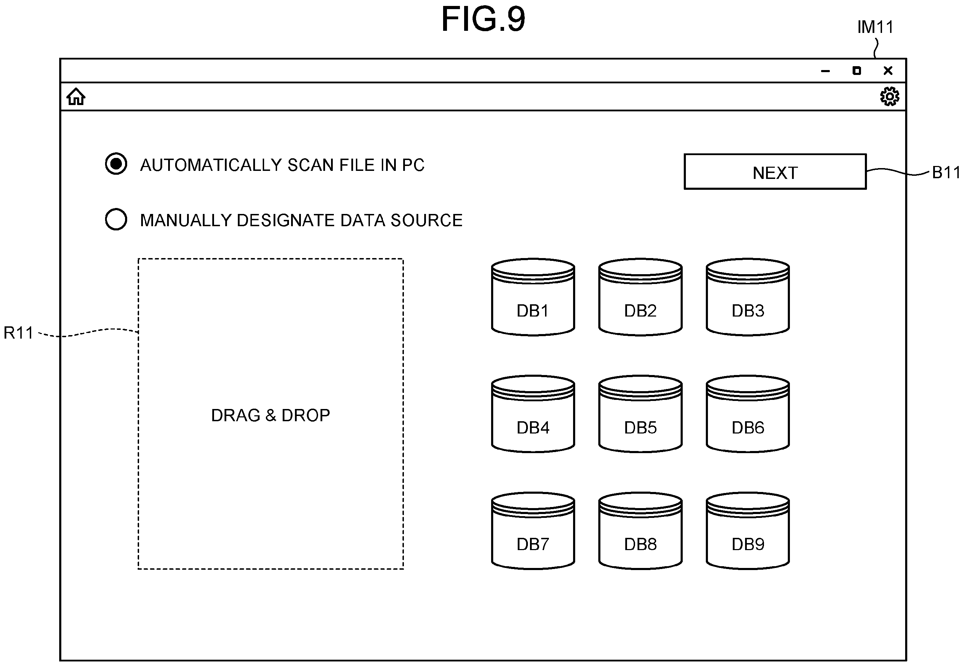

An example of a screen that the display control unit 138 causes the terminal apparatus 10 to display will be described with reference to FIGS. 9 to 15. FIG. 9 is a diagram illustrating an example of an image for designating an acquisition source of the user data. The image illustrated in FIG. 9 is displayed on the terminal apparatus 10, for example, when the acquisition unit 131 acquires the user data.

In the example of FIG. 9, the display control unit 138 causes the terminal apparatus 10 to display an image IM11. The image IM11 is an image that accepts the selection of the acquisition source of the user data by the user. In the image IM11, the user selects one acquisition source by selecting only one of two options including "automatically scan the files in the PC" or "manually designate a data source".

In the image IM11, icons DB1 to DB9 of external databases are displayed. In a case where the user selects "manually designate a data source", the user moves an arbitrary icon to a selection region R11 by, for example, a drag & drop operation to designate the data source. In a case where the user designates the acquisition source of the user data and selects a "next" button B11, the acquisition unit 131 of the information processing apparatus 100 acquires the user data from the designated acquisition source. Note that the operation for the designation of the database is not limited to the drag & drop operation, and for example, the designation of the database may be performed by the user clicking the icons DB1 to DB9.

Note that, here, an example in which the display control unit 138 causes the user to select the PC or the external data source as the acquisition source has been described, but the present disclosure is not limited thereto. For example, the display control unit 138 may cause the user to select the storage unit 120 of the information processing apparatus 100 as the acquisition source. Alternatively, for example, the display control unit 138 may cause the user to select an externally mounted storage medium such as a hard disk, a magnetic disk, a magneto-optical disk, an optical disk, a USB memory, or a memory card as the acquisition source. The display control unit 138 may receive direct input of an address indicating a storage destination of the user data.

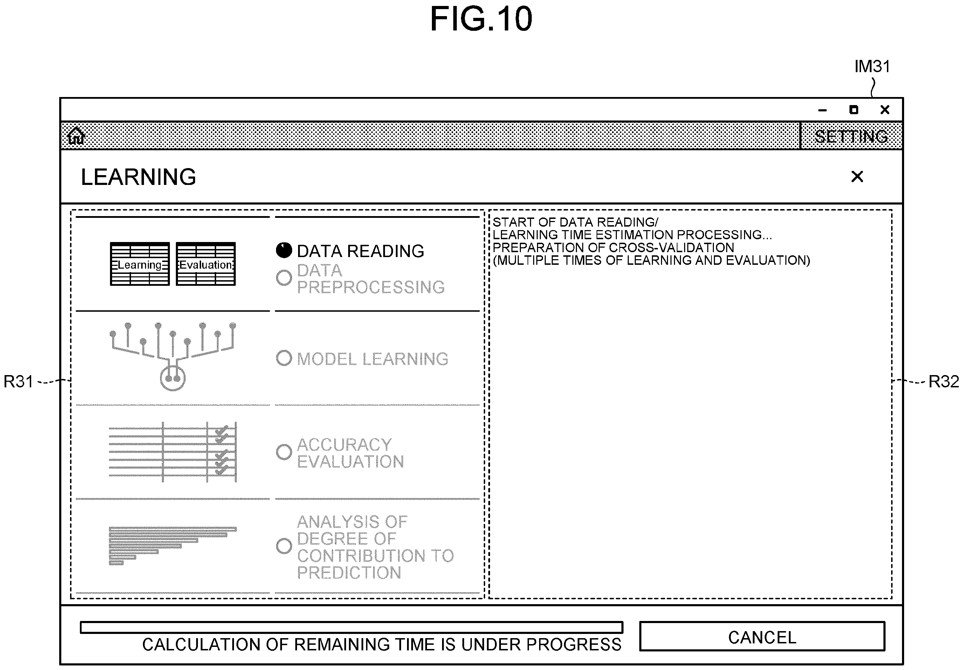

Subsequently, the display control unit 138 presents a screen showing the progress of the processing performed by each unit of the control unit 130 to the user. An example of the screen showing the progress and presented by the display control unit 138 will be described with reference to FIGS. 10 to 13. FIG. 10 is a diagram illustrating an example of an image indicating a situation of the calculation of the predicted processing time. An image IM31 illustrated in FIG. 10 is displayed on the terminal apparatus 10, for example, while the time prediction unit 141 calculates the predicted processing time.

In the example of FIG. 10, the display control unit 138 causes the terminal apparatus 10 to display the image IM31. As illustrated in FIG. 10, an outline of the processing is displayed in a left region R31 of the image IM31. As the outline of the processing, an outline of the processing performed by each unit of the control unit 130 such as model learning performed by the learning unit 134 is displayed. Among the displayed outlines, the display control unit 138 displays processing that is completed or is being executed in a dark color, and displays processing that has not been executed yet in a light color. The image IM31 of FIG. 10 indicates that data is being read and that data preprocessing, model learning, and the like are to be performed thereafter.

In addition, details of processing actually performed by each unit of the control unit 130 are displayed in a right region R32 of the image IM31 of FIG. 10. In the example of FIG. 10, since the time prediction unit 141 calculates the predicted processing time, "start of data reading/learning time estimation processing" is displayed.

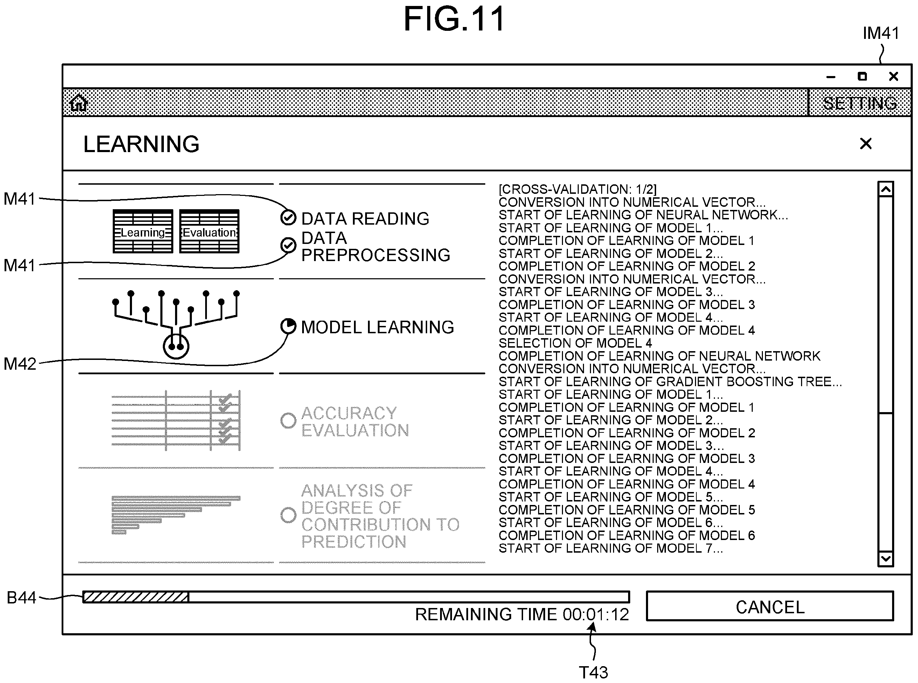

Next, a screen presented by the display control unit 138 in a case where the analysis processing proceeds and the learning unit 134 of the control unit 130 is learning the prediction model will be described with reference to FIG. 11. FIG. 11 is a diagram illustrating an example of an image indicating a situation of the learning of the prediction model.

In the example of FIG. 11, the display control unit 138 causes the terminal apparatus 10 to display an image IM41. As illustrated in FIG. 11, the display control unit 138 displays "data reading" and "data preprocessing" (corresponding to structured data generation processing performed by the interpretation unit 132), which have been completed, in a dark display color with check marks M41.

In addition, the display control unit 138 displays "model learning" (corresponding to the prediction model learning processing performed by the learning unit 134), which is being executed, in a dark display color together with an icon M42. The circular icon M42 is, for example, a circular indicator indicating the progress of the learning processing.

In the example of FIG. 11, the display control unit 138 displays a remaining required time T43 of the analysis processing on the lower side of the image IM41. In addition, the display control unit 138 displays a progress bar B44 indicating a progress corresponding to the remaining required time T43 together with the remaining required time T43.

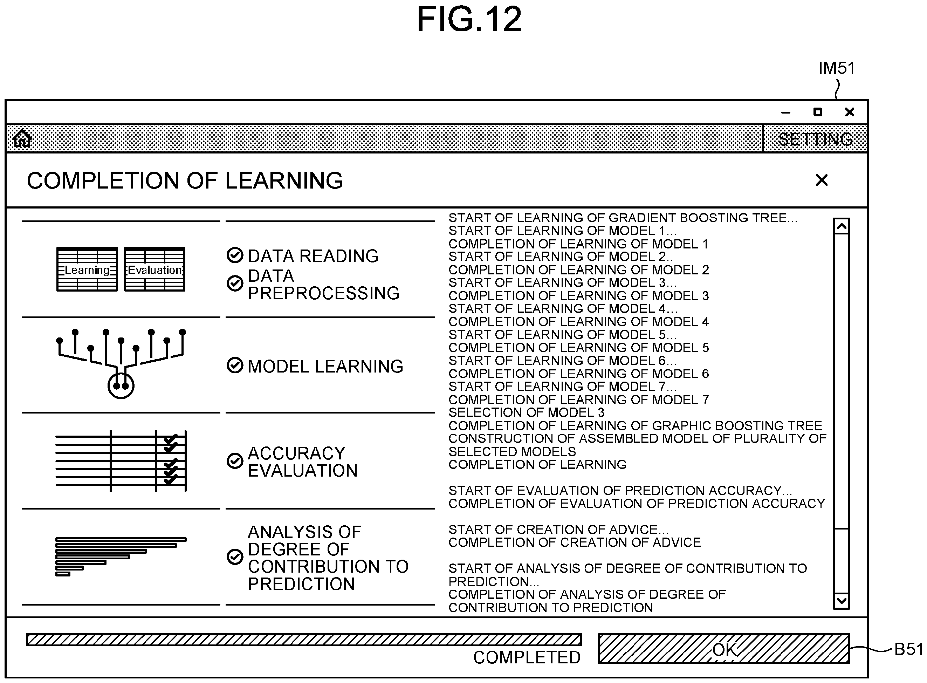

Subsequently, a screen presented by the display control unit 138 when the analysis processing is completed will be described with reference to FIG. 12. FIG. 12 is a diagram illustrating an example of an image indicating the completion of the analysis processing.

In the example of FIG. 12, the display control unit 138 causes the terminal apparatus 10 to display an image IM51. As illustrated in FIG. 12, the display control unit 138 displays all the completed processings in a dark display color with check marks. In addition, for example, the display control unit 138 displays an OK button B51 in the image IM51. For example, once the user presses the OK button B51, the display control unit 138 presents the analysis processing result to the user.

Next, an example in which the display control unit 138 causes the terminal apparatus 10 to display the analysis processing result of the information processing apparatus 100 will be described with reference to FIG. 13. FIG. 13 is a diagram illustrating an example of an image indicating the analysis processing result. Here, for example, in a case where the respective processings are performed by the evaluation unit 135, the prediction unit 136, and the collection determination unit 137, in addition to the extraction processing performed by the extraction unit 133, the image illustrated in FIG. 13 is displayed on the terminal apparatus 10 as an image indicating results of the processings.

In the example of FIG. 13, the display control unit 138 causes the terminal apparatus 10 to display an image IM21. The image IM21 is an image that presents the processing results of the information processing apparatus 100 to the user. The display control unit 138 displays information regarding a plurality of problem settings extracted by the extraction unit 133 as recommended problem settings in the regions R21, R22, and the like, respectively. For example, the display control unit 138 displays the problem settings in descending order of the business effect predicted by the prediction unit 136.

Note that the order in which the problem settings are displayed by the display control unit 138 described above is an example. For example, the display control unit 138 may display the problem settings in descending order of the evaluation value of the prediction model obtained by the evaluation performed by the evaluation unit 135. Alternatively, in a case where the extraction unit 133 extracts the problem settings by using the ranking learning, the display control unit 138 may display the problem settings in an order according to the information regarding the user. For example, the display control unit 138 may display the problem settings according to the rankings. Note that, since the contents displayed in the respective regions R21, R22, and the like are the same, only the region R21 will be described in detail below.

As illustrated in FIG. 13, the display control unit 138 displays a problem setting RS11 and an evaluation result RS12 in the region R21 of the screen IM21. Note that, in FIG. 13, it is assumed that the display control unit 138 displays, as the problem setting RS11, a sentence including a part of the "used items" and the "prediction target", such as "predicting whether or not a loan loss is to occur based on the type of occupation, the annual revenue, or the like". In addition, the display control unit 138 displays the accuracy of the prediction model as the evaluation result RS12. At this time, in FIG. 13, the display control unit 138 displays an evaluation comment in addition to the accuracy, like "accuracy of 82.6%, which is considerably good". By presenting the sentence and the evaluation comment as described above, the extraction result can be presented to the user in an easy-to-understand manner. Note that, in FIG. 13, in order to distinguish a plurality of problem settings and evaluation results, the problem settings and evaluation results are denoted with numbers, like "problem setting 1" and "evaluation result 1".

In addition, the display control unit 138 displays an edit icon C21 indicating that the problem setting RS11 is editable, near the problem setting RS11. In this manner, by displaying the edit icon C21, the user may directly change the problem setting, for example, may add or delete the "used item" or change the "prediction target" in the problem setting.

Next, in the example of FIG. 13, the display control unit 138 displays a constructed data set M21 as data used for prediction. The display control unit 138 displays, for example, the constructed data set M21 as a matrix. At this time, for example, the display control unit 138 may highlight an item corresponding to the "prediction target" by changing the display color of the item. The highlighting of the "prediction target" is not limited to the change of the display color, and may be made in various manners as long as the "prediction target" is displayed in a display mode different from that of the "used item". For example, the highlighting of the "prediction target" may be made in a manner in which the "prediction target" has a larger character size than the "used item" or is displayed with an underline. The highlighting of the "prediction target" may be made in a manner in which the highlighting target blinks.

In addition, the display control unit 138 displays an edit icon C22 indicating that the constructed data set M21 is editable, near the constructed data set M21. By selecting the edit icon C22, the user may directly change the problem setting, for example, may add or delete the "used item" or change the "prediction target" in the problem setting. Alternatively, the user may perform editing, for example, adding, correcting, or deleting data included in the constructed data set.

In this manner, as the display control unit 138 displays the constructed data set in the image IM21, it is possible to present, to the user, what data set has been used for the predictive analysis. Note that the display of the constructed data set illustrated in FIG. 13 is an example, and the present disclosure is not limited thereto. For example, in a case where the constructed data set is large and thus cannot be entirely displayed on the screen, the display control unit 138 may display a part of the constructed data set such as representative items and data. Alternatively, the display control unit 138 may display the entire constructed data set M21 as the user performs, for example, a scroll operation.

Note that, for example, it is assumed that the user selects the edit icons C21 and C22 and changes the problem setting or the constructed data set. In this case, the display control unit 138 may display an image that causes the user to select whether or not to perform the processing such as the generation of the prediction model, the evaluation, and the calculation of the business effect again with the changed content. In a case where the user selects to perform the processing again, the information processing apparatus 100 performs the processing such as the generation of the prediction model, the evaluation, and the calculation of the business effect again based on the content changed by the user.

The display control unit 138 displays various graphs and tables as the evaluation result. In the example illustrated in FIG. 13, the display control unit 138 displays a confusion matrix M22 and a graph G21 indicating the distribution of the prediction probability.

Note that the various graphs and tables displayed by the display control unit 138 are not limited to the example illustrated in FIG. 13. The display control unit 138 may display various graphs and tables such as a graph indicating the predictive analysis results in time series. Alternatively, the user may designate a graph or a table to be displayed. Note that data used for the graph or table displayed by the display control unit 138 is calculated by the evaluation unit 135, for example.

Subsequently, the display control unit 138 displays a business effect R23. The display control unit 138 displays the amount of business effect calculated by the prediction unit 136. At this time, as illustrated in FIG. 13, the display control unit 138 may display a predetermined calculated amount range, or may perform rounding processing of rounding the calculated amount to a predetermined digit when displaying the calculated amount.

The display control unit 138 displays an addable item R24 as data to be added, thereby presenting a suggested item included in the addition item R24 to the user. The addable item R24 includes the suggested item determined by the collection determination unit 137. Furthermore, the display control unit 138 may display the amount of business effect that is to be increased when the suggested item is added. The display control unit 138 displays the increase amount based on the decreased amount of business effect calculated by the collection determination unit 137.

At this time, as illustrated in FIG. 13, the display control unit 138 may perform rounding processing of rounding the increased amount to a predetermined digit and display the processed increased amount. Alternatively, for example, in a case where a plurality of suggested items having different increase amounts are displayed, the display control unit 138 may display a predetermined increase amount range.

In addition, the display control unit 138 displays an adoption button B21 selected when the predictive analysis using the suggested problem setting is adopted. Once the user selects the adoption button B21, the display control unit 138 displays an image for receiving an input such as the demonstration experiment result, the business effect, or the like in a case where the adopted predictive analysis is actually performed. In this manner, the information processing apparatus 100 can acquire past cases of the predictive analysis by receiving data in a case of actual introduction into business.

Alternatively, the display control unit 138 may display an example of the demonstration experiment such as a period or a region. The example of the demonstration experiment is displayed based on, for example, the demonstration experiments included in the past case. As a result, the user can perform the demonstration experiment with reference to the past case.

In addition to the above, the display control unit 138 displays various types of information in the image IM21. For example, the display control unit 138 displays a sentence or an icon in which a link to detailed information of the information displayed in the image IM21 is set.

In FIG. 13, in a case where the user performs a switching operation for displaying the details, for example, the user selects a sentence in which "more details" is underlined, the display control unit 138 displays the details with the corresponding content.

For example, in a case where an operation of displaying the details of the evaluation result is performed, the display control unit 138 may display an enlarged version of the confusion matrix M22 or the graph G21, or may additionally display a table or a graph that is not displayed in the image IM21.

Furthermore, in a case where an operation of displaying the details of the business effect is performed, the display control unit 138 may display, for example, a detailed calculated amount or display a specific example of the introduction into business. In addition, in a case where an operation of displaying the details of the data to be added is performed, the display control unit 138 may display a detailed calculated amount or display a suggested item other than the suggested item displayed in the image IM21.

In addition, the display control unit 138 highlights, for example, the used item of the problem setting RS11, the suggested item of the addable item R24, and the accuracy value of the evaluation result RS12 by underlining them. For example, the user may be able to check details of the used item and details of the accuracy value by selecting the highlighted portion. Note that the highlighting of a highlighting target is not limited to the underline, and may be made in various manners as long as the highlighting target is displayed in a display mode different from that of others. For example, the highlighting of the highlighting target may be made in a manner in which the highlighting target has a larger character size than others or is displayed in a color different from that of others. Further, the highlighting of the highlighting target may be made in a manner in which the highlighting target blinks.

Furthermore, in the example of FIG. 13, the display control unit 138 displays a text box TB21 that receives a question or the like from the user in addition to the processing result of the information processing apparatus 100. In this manner, the display control unit 138 may display information other than the information regarding the processing result.

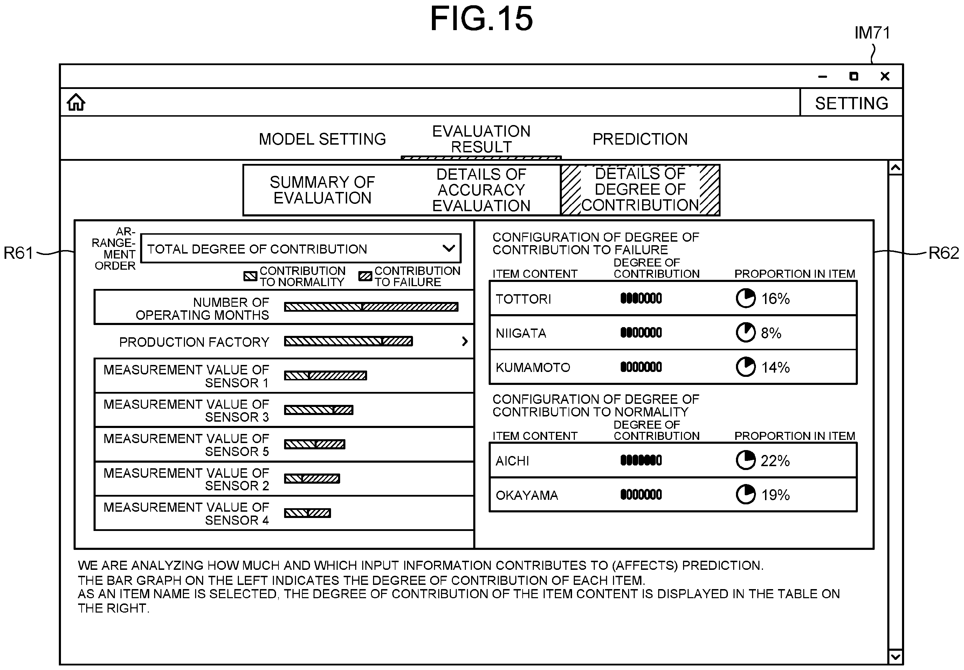

Next, another example of the analysis processing result that the display control unit 138 causes the terminal apparatus 10 to display will be described with reference to FIGS. 14 and 15. FIG. 14 is a diagram (1) illustrating another example of the image indicating the analysis processing result. FIG. 15 is a diagram (2) illustrating another example of the image indicating the analysis processing result. Here, a case of indicating the calculation processing result of the contribution degree calculation unit 142 in the analysis processing will be described. In FIGS. 14 and 15, a result of performing the predictive analysis for predicting whether or not a machine operating in a factory is to fail will be described as an example.

In the example of FIG. 14, the display control unit 138 causes the terminal apparatus 10 to display an image IM61. In FIG. 14, the display control unit 138 displays the degree of contribution for each item such as "the number of operating months" or "production factory" as a bar graph in a left region R61 of the image IM61. As described above, the degree of contribution has a positive value and a negative value. Therefore, the display control unit 138 displays a value obtained by combining the total of the positive values and the total of the negative values as a bar graph.

Note that, here, since whether or not the machine is to fail is predicted, the feature amount that increases the prediction probability that the machine is to fail has a positive value, and the feature amount that increases the prediction probability that the machine does not fail (= normal) has a negative value. In FIG. 14, it can be seen that both of the degree of contribution of "the number of operating months" to the prediction probability that the prediction result is "failure" and the degree of contribution of "the number of operating months" to the prediction probability that the prediction result is "normal" are high. In this way, by displaying the degrees of contribution having a positive value and a negative value for each item, it is possible to clearly display which item greatly contributes to the predictive analysis.

Note that a display form in which the degree of contribution is displayed is not limited to the bar graph, and the degree of contribution may be displayed using a pie chart, a line graph, or other indicators, or may be displayed by various display methods such as displaying the numerical value of the degree of contribution itself.

In addition, the display control unit 138 displays details of the degree of contribution of a specific item in a right region R62 of the image IM61. In the example of FIG. 14, the display control unit 138 displays the degree of contribution and the proportion of each feature amount (item content) of "the number of operating months" as details of the degree of contribution of "the number of operating months". The degree of contribution and the proportion are calculated by the contribution degree calculation unit 142.

In FIG. 14, the display control unit 138 displays, for example, a predetermined number of feature amounts (item contents) contributing to a prediction result "failure" and feature amounts (item contents) contributing to a prediction result "normal" in descending order of the degree of contribution, as the details of the degree of contribution.

At this time, the display control unit 138 may display a numerical value of the degree of contribution, or may display an indicator corresponding to the degree of contribution as illustrated in FIG. 14. For example, in FIG. 14, an indicator including a plurality of bars is arranged, and the display control unit 138 displays more bars from the left side to the right side as the degree of contribution increases.

In addition, the display control unit 138 displays the proportion of the feature amount in the item together with the degree of contribution. In the example of FIG. 14, the display control unit 138 displays an indicator M63 corresponding to the degree of contribution of an item content "99.00 to 110.0" contributing to failure and a pie chart M64 corresponding to the proportion. FIG. 14 illustrates that data "99 months to 110 months after the machine is operated" has the highest degree of contribution to the predictive analysis for predicting "failure". In addition, it is indicated that the data "99 months to 110 months after the machine is operated" occupies 9% of data included in the number of operating months.

In addition, in the example of FIG. 14, it can be seen that the item content "110.0 to 116.0" contributing to failure has the second highest degree of contribution, but the proportion in the item is 3%, that is, the proportion in the data included in the number of operating months is low. In this way, by displaying the degree of contribution and the proportion of each item content, it is possible to present how high the degree of contribution of each item content is and how frequently the item content occurs to the user in an easy-to-understand manner.

Furthermore, in a case where the feature amount (item content) is a numerical value, the display control unit 138 may indicate a numerical value range R65 of each item content. In the example of FIG. 14, the display control unit 138 displays one graph of a numerical value range of each item content with a horizontal axis representing the number of operating months. As a result, the numerical value range of the item content can be presented to the user in a visually easy-to-understand manner.

Next, another example of the image indicating the analysis processing result will be described with reference to FIG. 15. In the example of FIG. 15, the display control unit 138 causes the terminal apparatus 10 to display an image IM71. For example, it is assumed that the user selects "production factory" of the item displayed in a left region R61. In this case, as illustrated in FIG. 15, the display control unit 138 displays details of the degree of contribution of the "production factory" in a right region R62. In the example of FIG. 15, the display control unit 138 displays an indicator of the degree of contribution and the proportion in the item for each of "Tottori" and "Niigata" which are feature amounts (item contents) of the "production factory".

Note that a display form in which the degree of contribution or proportion is displayed is not limited to the example described above, and the degree of contribution or proportion may be displayed using various graphs or indicators, or may be displayed by various display methods such as displaying the numerical value of the degree of contribution itself.

### [1-5. Procedure of Information Processing According to Embodiment]

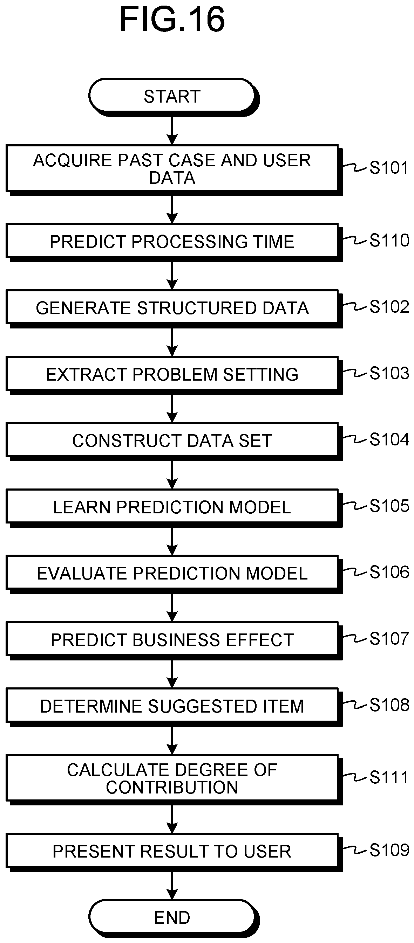

Next, a procedure of the information processing according to the embodiment will be described with reference to FIG. 16. FIG. 16 is a flowchart illustrating a procedure of the analysis processing according to the embodiment of the present disclosure.

As illustrated in FIG. 16, the information processing apparatus 100 acquires a past case and user data from the storage unit 120 (Step S101). The information processing apparatus 100 predicts a processing time (predicted processing time) required for the analysis processing by using a part of the acquired user data (Step S110). The information processing apparatus 100 generates structured data by analyzing and structuring the user data (Step S102).

The information processing apparatus 100 extracts a problem setting based on the structured data and the past case (Step S103). The information processing apparatus 100 constructs a data set according to the extracted problem setting (Step S104).

The information processing apparatus 100 learns a prediction model based on the problem setting and the constructed data set (Step S105). The information processing apparatus 100 divides the data set into learning data and test data, and generates the prediction model by using the learning data.

Subsequently, the information processing apparatus 100 evaluates the prediction model by using the test data (Step S106). The information processing apparatus 100 predicts a business effect in a case where the prediction model is introduced into business (Step S107).

Based on the past case, the information processing apparatus 100 determines, as a suggested item, an item that may increase the business effect if added to the data set (Step S108). The information processing apparatus 100 calculates the degree of contribution of a feature amount of the test data (Step S111). The information processing apparatus 100 presents the processing result to the user (Step S109).

Note that, in a case where the user changes the problem setting or data, the information processing apparatus 100 may return to Step S105 and perform the learning of the prediction model, the evaluation, or the calculation of the business effect again. Furthermore, the information processing apparatus 100 may predict the processing time at a timing when the processing of each step ends. Furthermore, in a case where the extraction unit 133 extracts a plurality of problem settings, the analysis processing for all the problem settings may be performed by repeatedly performing Steps S104 to S111 for each problem setting.

### [2. Other Configuration Examples]

Each configuration described above is an example, and the information processing system 1 may have any system configuration as long as it can extract the problem setting and construct the data set based on the past cases and the user data. For example, the information processing apparatus 100 and the terminal apparatus 10 may be integrated.

Further, among the respective processing described in the above-described embodiment, all or some of the processing described as being automatically performed can be manually performed. Alternatively, all or some of the processing described as being manually performed can be automatically performed by a known method. In addition, the processing procedures, specific names, information including various data and parameters illustrated in the specification and drawings can be arbitrarily changed unless otherwise specified. For example, various information illustrated in each drawing is not limited to the illustrated information.

Further, each illustrated component of each apparatus is functionally conceptual, and does not necessarily have to be configured physically as illustrated in the drawings. That is, the specific modes of distribution/integration of the respective apparatuses are not limited to those illustrated in the drawings. All or some of the apparatuses can be functionally or physically distributed/integrated in any arbitrary unit, depending on various loads or the status of use.

Further, the effects in each embodiment described in the present specification are merely examples. The effects of the present disclosure are not limited thereto, and other effects may be obtained.

### [3. Hardware Configuration]

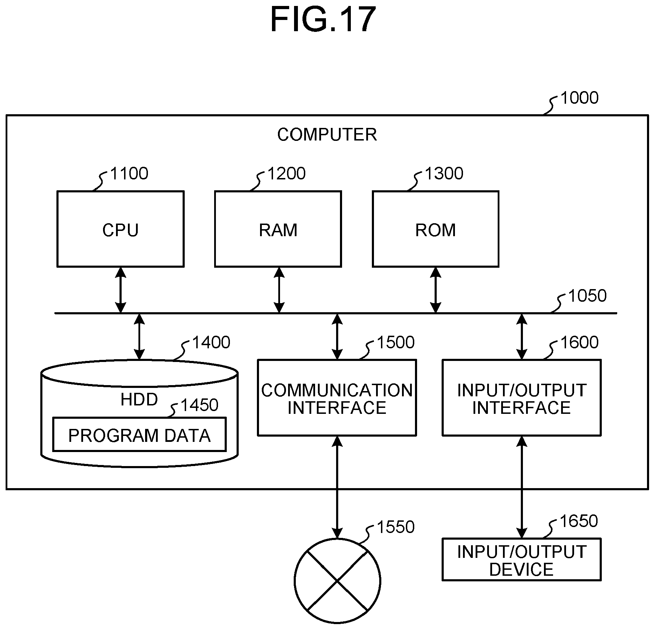

An information device such as the information processing apparatus 100 or the terminal apparatus 10 according to each embodiment or modified example described above is implemented by, for example, a computer 1000 having a configuration as illustrated in FIG. 17. FIG. 17 is a hardware configuration diagram illustrating an example of the computer 1000 that implements functions of the information processing apparatus such as the information processing apparatus 100 or the terminal apparatus 10. Hereinafter, the information processing apparatus 100 according to the embodiment will be described as an example. The computer 1000 includes a CPU 1100, a RAM 1200, a read only memory (ROM) 1300, a hard disk drive (HDD) 1400, a communication interface 1500, and an input/output interface 1600. Each component of the computer 1000 is connected by a bus 1050.

The CPU 1100 is operated based on a program stored in the ROM 1300 or the HDD 1400, and controls each component. For example, the CPU 1100 loads the program stored in the ROM 1300 or the HDD 1400 on the RAM 1200 and performs processing corresponding to various programs.

The ROM 1300 stores a boot program such as a basic input output system (BIOS) executed by the CPU 1100 when the computer 1000 is started, a program that depends on the hardware of the computer 1000, or the like.

The HDD 1400 is a recording medium that is readable by the computer, in which a program executed by the CPU 1100, data used by the program, or the like, is non-temporarily recorded. Specifically, the HDD 1400 is a recording medium in which a program according to the present disclosure, which is an example of program data 1450, is recorded.

The communication interface 1500 is an interface for the computer 1000 to be connected to an external network 1550 (for example, the Internet). For example, the CPU 1100 receives data from another equipment or transmits data generated by the CPU 1100 to another equipment via the communication interface 1500.

The input/output interface 1600 is an interface for connecting an input/output device 1650 and the computer 1000 to each other. For example, the CPU 1100 receives data from an input device such as a keyboard or mouse via the input/output interface 1600. Further, the CPU 1100 transmits data to an output device such as a display, a speaker, or a printer via the input/output interface 1600. Further, the input/output interface 1600 may function as a medium interface for reading a program or the like recorded in a predetermined recording medium. Examples of the medium include an optical recording medium such as a digital versatile disc (DVD) or a phase change rewritable disk (PD), a magneto-optical recording medium such as a magneto-optical disk (MO), a tape medium, a magnetic recording medium, and a semiconductor memory.

For example, in a case where the computer 1000 functions as the information processing apparatus 100 according to the embodiment, the CPU 1100 of the computer 1000 implements the functions of the control unit 130 and the like by executing the information processing program loaded on the RAM 1200. In addition, the HDD 1400 stores the program according to the present disclosure and data in the storage unit 120. Note that the CPU 1100 reads program data 1450 from the HDD 1400 and executes the program data 1450, but as another example, these programs may be acquired from another apparatus via the external network 1550.

Note that the present technology can also have the following configurations.
(1) An information processing apparatus including:
   a control unit that
   acquires a past case including a past prediction target and an analysis data set used for predictive analysis for the past prediction target,
   acquires data to be used for predictive analysis,
   extracts a prediction target in a case of performing the predictive analysis by using the data based on the data and the past case, and
   constructs, based on the data, a data set to be used for the predictive analysis for the extracted prediction target.
(2) The information processing apparatus according to (1), in which the control unit selects the past prediction target from the past case based on information regarding a user, and
   a variable included in the data and corresponding to the selected past prediction target is extracted as the prediction target.
(3) The information processing apparatus according to (1) or (2), in which the control unit
   extracts a plurality of explanatory variables based on the extracted prediction target and the data, and
   constructs the data set based on the extracted prediction target and the plurality of explanatory variables.
(4) The information processing apparatus according to any one of (1) to (3), in which the control unit extracts a plurality of the prediction targets and constructs the data set for each of the plurality of extracted prediction targets.
(5) The information processing apparatus according to any one of (1) to (4), in which the control unit predicts an effect obtained in a case of introducing the predictive analysis for the extracted prediction target into business based on the past case.
(6) The information processing apparatus according to (5), in which
   the past case includes a case effect obtained in a case of introducing the predictive analysis for the past prediction target into business, and
   the control unit predicts the effect by learning an effect prediction model in which the case effect included in the past case is set as a prediction target by using the analysis data set, and performing predictive analysis by using the effect prediction model and the constructed data set.
(7) The information processing apparatus according to (6), in which the control unit presents the plurality of extracted prediction targets to the user in an order according to the effect or/and the information regarding the user.
(8) The information processing apparatus according to any one of (1) to (7), in which the control unit presents the explanatory variable that is included in the analysis data set and is not included in the constructed data set to the user as data for suggesting additional collection.
(9) An information processing method performed by a processor, the information processing method including:
   acquiring a past case including a past prediction target and an analysis data set used for predictive analysis for the past prediction target;
   acquiring data to be used for predictive analysis;
   extracting a prediction target in a case of performing the predictive analysis by using the data based on the data and the past case; and
   constructing, based on the data, a data set to be used for the predictive analysis for the extracted prediction target.
(10) A program for causing a computer to function as:
   a control unit that
   acquires a past case including a past prediction target and an analysis data set used for predictive analysis for the past prediction target,
   acquires data to be used for predictive analysis,
   extracts a prediction target in a case of performing the predictive analysis by using the data based on the data and the past case, and
   constructs, based on the data, a data set to be used for the predictive analysis for the extracted prediction target.

### Reference Signs List

- 1: INFORMATION PROCESSING SYSTEM
- 100: INFORMATION PROCESSING APPARATUS
- 110: COMMUNICATION UNIT
- 120: STORAGE UNIT
- 121: PAST CASE STORAGE UNIT
- 122: USER DATA STORAGE UNIT
- 123: USER PROFILE STORAGE UNIT
- 130: CONTROL UNIT
- 131: ACQUISITION UNIT
- 132: INTERPRETATION UNIT
- 133: EXTRACTION UNIT
- 134: LEARNING UNIT
- 135: EVALUATION UNIT
- 136: PREDICTION UNIT
- 137: COLLECTION DETERMINATION UNIT
- 138: DISPLAY CONTROL UNIT
- 10: TERMINAL APPARATUS

## Claims

1. An information processing apparatus comprising:
a control unit that
acquires a past case including a past prediction target and an analysis data set used for predictive analysis for the past prediction target,
acquires data to be used for predictive analysis,
extracts a prediction target in a case of performing the predictive analysis by using the data based on the data and the past case, and
constructs, based on the data, a data set to be used for the predictive analysis for the extracted prediction target.

2. The information processing apparatus according to claim 1, wherein the control unit selects the past prediction target from the past case based on information regarding a user, and
a variable included in the data and corresponding to the selected past prediction target is extracted as the prediction target.

3. The information processing apparatus according to claim 2, wherein the control unit
extracts a plurality of explanatory variables based on the extracted prediction target and the data, and
constructs the data set based on the extracted prediction target and the plurality of explanatory variables.

4. The information processing apparatus according to claim 3, wherein the control unit extracts a plurality of the prediction targets and constructs the data set for each of the plurality of extracted prediction targets.

5. The information processing apparatus according to claim 4, wherein the control unit predicts an effect obtained in a case of introducing the predictive analysis for the extracted prediction target into business based on the past case.

6. The information processing apparatus according to claim 5, wherein
the past case includes a case effect obtained in a case of introducing the predictive analysis for the past prediction target into business, and
the control unit predicts the effect by learning an effect prediction model in which the case effect included in the past case is set as a prediction target by using the analysis data set, and performing predictive analysis by using the effect prediction model and the constructed data set.

7. The information processing apparatus according to claim 6, wherein the control unit presents the plurality of extracted prediction targets to the user in an order according to the effect or/and the information regarding the user.

8. The information processing apparatus according to claim 7, wherein the control unit presents the explanatory variable that is included in the analysis data set and is not included in the constructed data set to the user as data for suggesting additional collection.

9. An information processing method performed by a processor, the information processing method comprising:
acquiring a past case including a past prediction target and an analysis data set used for predictive analysis for the past prediction target;
acquiring data to be used for predictive analysis;
extracting a prediction target in a case of performing the predictive analysis by using the data based on the data and the past case; and
constructing, based on the data, a data set to be used for the predictive analysis for the extracted prediction target.

10. A program for causing a computer to function as:
a control unit that
acquires a past case including a past prediction target and an analysis data set used for predictive analysis for the past prediction target,
acquires data to be used for predictive analysis,
extracts a prediction target in a case of performing the predictive analysis by using the data based on the data and the past case, and
constructs, based on the data, a data set to be used for the predictive analysis for the extracted prediction target.
